# EUROPÄISCHE PATENTSCHRIFT

(11) **EP 2 929 822 B1**
(45) Veröffentlichungstag und Bekanntmachung des Hinweises auf die Patenterteilung: **22.02.2017**
(21) Anmeldenummer: 14163816.3
(22) Anmeldetag: 08.04.2014
(51) Int. Cl.: A47L 9/14

(54) **STAUBSAUGERFILTERBEUTEL FÜR EINEN UPRIGHT-STAUBSAUGER**
VACUUM CLEANER FILTER BAG FOR AN UPRIGHT VACUUM CLEANER
SAC D'ASPIRATEUR POUR ASPIRATEUR VERTICAL

(43) Veröffentlichungstag der Anmeldung: 14.10.2015
(73) Patentinhaber: Eurofilters N.V., 3900 Overpelt (BE)
(72) Erfinder: Schultink, Jan, 3900 Overpelt (BE); Sauer, Ralf, 3900 Overpelt (BE)
(74) Vertreter: Pfenning, Meinig & Partner mbB

(56) Entgegenhaltungen:
- WO-A1-2007/134734
- WO-A1-2012/060194
- US-A- 3 416 721
- US-A- 5 342 420

## Beschreibung

Die vorliegende Erfindung betrifft einen Staubsaugerfilterbeutel für einen Upright-Staubsauger. Der erfindungsgemäße Staubsaugerfilterbeutel weist dabei eine größere Länge als Breite auf, wobei eine Längsseite und eine Schmalseite resultiert. Er wird gebildet von zwei Beutelwänden, die umlaufend miteinander verbunden sind, sodass zwischen den beiden Beutelwänden ein Innenraum ausgebildet ist. Eine Beutelwand weist dabei eine Eintrittsöffnung auf, durch die zu reinigende Luft in den Staubsaugerfilterbeutel einströmen kann. Der erfindungsgemäße Staubsaugerfilterbeutel zeichnet sich dadurch aus, dass die Beutelwand, in der die Eintrittsöffnung eingebracht ist, eine sich in Längsrichtung des Staubsaugerfilterbeutels erstreckende Faltung aufweist, wodurch diese Beutelwand eine erhöhte Flexibilität aufweist und der Staubsaugerfilterbeutel bei Umklappen der Halteplatte beim Einsetzen des Filterbeutels in einem Staubsauger sich derart öffnet, dass die Luft im Wesentlichen ungehindert in den Filterbeutel eintreten kann.

Aus dem Stand der Technik sind verschiedene Staubsaugerfilterbeutelformen bekannt. Bei Papierfilterbeuteln sind Klotz- oder Blockbodenfilterbeutel gebräuchlich. Bei Filterbeuteln aus Vliesstoffen sind solche Formen fertigungstechnisch kaum zu realisieren. Daher werden Filterbeutel aus Vliesstoffen hauptsächlich als Flachbeutel hergestellt. Es wurden erhebliche Anstrengungen unternommen, Filterbeutel aus Vliesstoffen zu entwickeln, mit denen eine besonders gute Anpassung an einen Beutelaufnahmeraum zu gewährleisten ist. Derartige Filterbeutel aus Vliesstoffen, die dem bekannten Klotz- oder Blockbodenfilterbeuteldesign in konstruktiver Hinsicht nachempfunden sind, werden üblicherweise als 3D-Filterbeutel bezeichnet. Unter solchen 3D-Filterbeuteln werden Filterbeutel verstanden, die neben einer Oberseite und einer Unterseite noch zusätzliche Beutelseiten aufweisen. In Bodenstaubsaugern, wie sie in Europa gebräuchlich sind, werden praktisch ausschließlich Vliesstofffilterbeutel als Flachbeutel und Flachbeutel mit Seitenfalten eingesetzt. In den vereinigten Staaten und Großbritannien werden hauptsächlich Staubsaugertypen vom sogenannten Upright-Design verwendet, für die hauptsächlich Blockbodenbeutel aus Filterpapier eingesetzt werden. Upright-Staubsauger zeichnen sich dadurch aus, dass sie einen Reinigungskopf aufweisen, in den der Motor integriert ist. Auf diesem Reinigungskopf ist ein Auffanggefäß angebracht, in das der entsprechende Staubsaugerfilterbeutel für den Upright-Staubsauger eingesetzt wird. Die Staubsaugerfilterbeutel für Upright-Staubsauger zeichnen sich durch ein größeres Längen-zu-Breiten-Verhältnis, aus. Ein Upright-Staubsauger ist z.B. aus der EP 2 030 552 A2 bekannt. Hinsichtlich der räumlichen Dimensionierung und konstruktiver Details wird auch für die Zwecke der vorliegenden Erfindung insbesondere auf den Offenbarungsgehalt dieser Patentanmeldung Bezug genommen.

Insbesondere bei Flachbeuteln aus Vliesstoffen sind zur Vergrößerung der effektiven Filteroberflächen verschiedene Faltungen bekannt.

So offenbart beispielsweise die DE 20 2005 000 918 U1 einen Staubsaugerfilterbeutel mit einer aus schweißbarem flexiblen Filtermaterial bestehenden Wandung, der an zwei gegenüberliegenden Seiten Einfaltungen aufweist, wobei im Betriebszustand des Staubsaugerfilterbeutels eine Vergrößerung des Volumens des Filterbeutels durch Ausstülpung dieser Einfaltung erzielt wird.

Ein vergleichbarer Staubsaugerfilterbeutel, bei dem diese Einfaltungen auf allen vier Seiten vorhanden sind, ist aus der DE 20 2005 000 917 U1 bekannt. Eine Fortentwicklung dieses Konzeptes ist aus der WO 00764320 bekannt, wobei der dort dargestellter Staubsaugerfilterbeutel mehre seitliche Einfaltungen aufweist, die im Betriebszustand des Staubsaugerfilterbeutels ausgestülpt und zu einer Vergrößerung des Beutelvolumens führen.

Eine besonders effektive Vergrößerung des Staubsaugerfilterbeutelvolumens ist aus der EP 2 366 321 A1 bekannt. Der dort vorgestellte Fachbeutel weist eine Vielzahl von Faltungen der Beutelwände auf, sodass das Staubsaugerfilterbeutelvolumen und die Staubspeicherkapazität effektiv vergrößert werden.

Ein gattungsgemässer Staubsaugerfilterbeutel ist auch aus der WO 2007/134734 bekannt.

Bei Staubsaugerfilterbeuteln aus Vliesstoffen für Upright-Staubsauger stellt sich allerdings prinzipiell eine andere Problematik.

Diese Staubsaugerfilterbeutel sind von Haus aus großvolumig gewählt, sodass es primär nicht auf die Vergrößerung des ohnehin enormen Volumens des Staubsaugerfilterbeutels ankommt. Ein für das Volumen des Upright-Staubsaugers dimensionierter Flachfilterbeutel aus Vliesstoff ist in einem Upright Staubsauger nur bedingt einsetzbar. Ein solcher Filterbeutel entfaltet sich - je nach Einbausituation im Filterbeutelaufnahmeraum eines Upright Staubsaugers nicht oder nur unvollständig. Das wesentliche Problem besteht darin, dass sich ein entsprechender Flachbeutel aus Vliesstoff sich nicht vollständig aus dem Lagerzustand entfaltet. Zusätzlich hierzu besteht die Problematik, dass es bei m Einlegen eines Flachfilterbeutels in dem Upright-Staubsauger zu Abknickungen im Filterbeutel kommt, so dass die eigentliche Geometrie des Filterbeutels permanent verzerrt wird. Dies verstärkt die oben angesprochene Entfaltungsproblematik noch, ebenso wird dadurch das theoretische Füllvolumen sowie die homogene Verteilung des aufgenommenen Staubes im Filterbeutel nachhaltig beeinträchtigt. Bei längerem Betrieb kann es somit zu Verstopfungen des noch nicht vollständig entfalteten Staubsaugerfilterbeutels kommen, sodass dadurch eine merkliche Volumenreduzierung und ein Verlust an zu füllendem Volumen zu beobachten ist. Die Standzeit derartiger Upright-Filterbeutel kann sich dadurch merklich reduzieren.

Die vorliegende Erfindung stellt sich daher die Aufgabe, den speziellen Typ der Upright-Staubsaugerfilterbeutel fortzuentwickeln und insbesondere zu gewährleisten, dass bereits vor erster Inbetriebnahme des Staubsaugerfilterbeutels eine vollständige Entfaltung ermöglicht wird.

Ebenso ist es Aufgabe der vorliegenden Erfindung Verwendungszwecke des erfindungsgemäßen Upright-Staubsaugerfilterbeutels anzugeben, sowie ein Verfahren zu dessen Herstellung zu benennen.

Diese Aufgabe wird bezüglich eines Staubsaugerfilterbeutels mit den Merkmalen des Patentanspruchs 1, hinsichtlich Verwendungszwecke des Staubsaugerfilterbeutels mit den Merkmalen des Patentanspruchs 13 sowie bezüglich eines Verfahrens zur Herstellung des Staubsaugerfilterbeutels mit den Merkmalen des Patentanspruchs 14 gelöst. Die jeweiligen abhängigen Patentansprüche stellen dabei vorteilhafte Weiterbildungen dar.

Die Erfindung betrifft somit einen Staubsaugerfilterbeutel für einen Upright-Staubsauger, der eine Länge und eine Breite in einem Verhältnis von > 1,5 aufweist, so dass der Staubsaugerfilterbeutel eine Längsseite und eine Schmalseite aufweist, mit einer ersten ein Filtermaterial umfassenden Beutelwand, einer zweiten ein Filtermaterial umfassenden Beutelwand, wobei die erste und zweite Beutelwand randseitig umlaufend verbunden sind, so dass der Staubsaugerfilterbeutel vollständig geschlossen ist und zwischen der ersten und der zweiten Beutelwand ein Innenraum ausgebildet ist, eine in die erste Beutelwand eingebrachte Eintrittsöffnung, durch die zu reinigende Luft in den Staubsaugerfilterbeutel einströmen kann sowie eine die Eintrittsöffnung einfassende Halteplatte, wobei zumindest die erste Beutelwand eine mindestens eine erste und eine zweite Seitenfalte umfassende, sich in Längsrichtung des Staubsaugerfilterbeutels erstreckende Faltung aufweist, wobei die erste und zweite Seitenfalte parallel oder im Wesentlichen parallel zueinander verlaufen, die erste Seitenfalte zwei Schenkel aufweist, und das Längenverhältnis des Schenkels zum Schenkel von 0,1 bis 0,8 beträgt.

Durch das Längen-zu-Breiten-Verhältnis von > 1,5 weist der Staubsaugerfilterbeutel eine Längsseite und eine Schmalseite auf. Die erste Beutelwand des Staubsaugerfilterbeutels weist dabei sowohl die Faltung als auch die Halteplatte samt Eintrittsöffnung auf. Durch die erfindungsgemäße vorhandene Faltung auf der ersten Beutelwand weist die erste Beutelwand eine vergrößerte Oberfläche, verglichen mit der durch die Umrisse des Filterbeutels gebildete Fläche auf. Die Faltung ist dabei randseitig in der die beiden Beutelwände umlaufenden Fixierung eingebunden, d.h. die aufeinander liegenden Schenkel sind hierbei miteinander in der Fixierung verbunden. In der Beutelwand selbst ist die Faltung jedoch lose und flexibel vorhanden. Wird nunmehr ein erfindungsgemäßer Staubsaugerfilterbeutel in den hierfür vorgesehenen Filterraum des Upright-Staubsaugers eingesetzt, wird der Ausblasstutzen des Upright-Staubsaugers in die Eintrittsöffnung des Staubsaugerfilterbeutels eingeführt und die Halteplatte an einer im Upright-Staubsauger vorhandenen Arretierung fixiert. Hierbei muss die Halteplatte aus ihrer Lagerposition bewegt werden, beispielsweise um 90° gekippt werden. Aufgrund der Tatsache, dass durch die Faltung in der ersten Beutelwand mehr Filtermaterial verglichen mit der oben beschriebenen nominellen durch die Umrisse definierten Fläche zur Verfügung steht, ist genügend Spielraum für eine derartige Bewegung der Halteplatte zur Fixierung und Arretierung des Staubsaugerfilterbeutels im Upright-Staubsauger vorhanden. Gleichzeitig erfolgt dabei ein Aufziehen der Faltung und eine asymmetrische Verformung des Upright-Staubsaugerfilterbeutels, wodurch bereits beim Einbringen des Staubsaugerfilterbeutels in den Upright-Staubsauger eine komplette Entfaltung stattfindet. Eine erstmalige Entfaltung des Staubsaugerfilterbeutels erfolgt somit bereits vor erstmaliger Inbetriebnahme des eingesetzten Staubsaugerfilterbeutels und die eingangs beschriebene Problematik der möglicherweise unvollständigen Entfaltung des Staubsaugerfilterbeutels wird somit effektiv unterbunden. Bereits beim Einsetzen kann somit gewährleistet werden, dass der Staubsaugerfilterbeutel vollständig entfaltet im Upright-Staubsauger vorliegt.

Jede Falte, so wie der Begriff im Zusammenhang mit der vorliegenden Erfindung verwendet wird, umfasst zwei Faltenschenkel und ein Faltenscharnier. Unter einem Faltenscharnier wird der Punkt einer Falte mit dem geringsten Krümmungsradius verstanden. Durch die gedachte Verbindung der Faltenscharniere wird eine sogenannte Faltenachse erhalten. Die Faltenachse wird auch als Faltenrücken bezeichnet. Die Faltenachse kann der Längsachse einer Falte entsprechen. Der Bereich einer Falte mit einem Krümmungsradius, der größer ist als der minimale Krümmungsradius der Falte, werden als Faltenschenkel bezeichnet. Der zwischen den Faltenschenkeln einer Falte liegende Bereich wird als Faltenkern bezeichnet. Die Faltenschenkel einer Falte können also insbesondere auch eine Krümmung aufweisen. Falten können auch Wendepunkte aufweisen. Wendepunkte sind jene Stellen einer Falte, insbesondere der Faltenschenkl, an welchen sich die Krümmung der Falte von konkav zu konvex ändert. Eine Verbindungslinie, die mehrere Wendpunkte einer Falte verbindet, wird als Inflexionslinie (Wendelinie) bezeichnet. Zwei benachbarte Falten können sich auch einen Faltenschenkel teilen. Die Abfolge mehrerer Falten wird im Zusammenhang mit der vorliegenden Erfindung als Faltung bezeichnet. Faltungen können insbesondere Schenkel haben, die parallel zur Beutelwand verlaufen. Die Faltenschenkel der Falten können insbesondere glatt sein. Unter "glatt" wird hierbei verstanden, dass die Faltenschenkel keine Verdichtungen und/oder Strukturierungen aufweisen, insbesondere die die Form der Falten stabilisieren sollen. Ein oder mehrere Faltenschenkel einer oder mehrerer Falten können eine oder mehrere Prägestrukturen umfassen, insbesondere wobei die Prägestrukturen nicht zum Stabilisieren der Form der Falten dienen. Dadurch kann gegebenenfalls eine weitere Vergrößerung der zur Filtration zur Verfügung stehenden Fläche erreicht werden.

Bei der Erfindung ist es nunmehr wesentlich, dass der Schenkel der ersten Falte, der durch den Abschnitt der Wandung gebildet wird, die von der seitlichen Verbindungskante des Staubsaugerfilterbeutels bis zur ersten Falte verläuft, länger ist als der zweite Schenkel der ersten Falte, d.h. der Schenkel, der durch die Verbindung der ersten und zweiten Falte gebildet wird und somit erster und zweiter Falte gemein ist. Somit ist gewährleistet, dass die erste Falte, aber auch die zweite Falte im Bereich zwischen den beiden seitlichen Verbindungslinien der ersten und zweiten Wandung des Staubsaugerfilterbeutels in Längsrichtung angeordnet sind. Hierdurch wird eine optimale Entfaltung beim Einsetzen des Staubsaugerfilterbeutels in den Upright-Staubsauger gewährleistet.

Durch die erfindungsgemäße Anordnung bzw. Bemessung der jeweiligen Schenkel der ersten Falte ist die Faltung im erfindungsgemäßen Staubsaugerfilterbeutel liegend ausgebildet. Hierunter wird verstanden, dass die Faltenschenkel der Faltung im wesentlichen parallel zur Beutelwand angeordnet sind und übereinander zum Liegen kommen.

Die Halteplatte wird hier allgemein als ein Element des Staubsaugerfilterbeutels angesehen, das der Halterung des Staubsaugerfilterbeutels im Inneren eines Staubsaugergehäuses dient. Die Halteplatte kann insbesondere mit der Beutelwand des Staubsaugerfilterbeutels verbunden sein und im Bereich einer Einströmöffnung angeordnet sein. Es kann vorteilhaft sein die Faltungen aufweisende Beutelwand in einem ersten Schritt zu verdichten, beispielsweise durch Ultraschallschweißung, und in einem zweiten Schritt die Halteplatte aufzuschweißen. Zur Halterung des Staubsaugerfilterbeutels in einem Staubsauger wird die Halteplatte mit einem entsprechenden Halterungselement des Staubsaugers verbunden, insbesondere in Eingriff gebracht. Die Halteplatte kann grundsätzlich eine beliebige Form aufweisen. Beispielsweise kann die Halteplatte als ebenes, flächiges Bauteil wie in der EP 1 849 392 gezeigt, ausgebildet sein. Die Halteplatte kann auch eine komplexere Struktur, wie etwa in der DE 20 2008 006 604 gezeigt, aufweisen.

Gemäß einer bevorzugten Ausführungsform ist die Halteplatte mit der Eintrittsöffnung nahe eines schmalseitigen Randes (d.h. einer Schmalseite) des Staubsaugerfilterbeutels angeordnet. Die Halteplatte ist dabei vollflächig in der ersten Beutelwand untergebracht, d.h. die Halteplatte überragt an keiner Stelle die den Filterbeutel abschließende, durch die umlaufende Verbindung erzeugte Dimensionierung des Staubsaugerbeutels. Hierbei beträgt bevorzugt das Verhältnis des minimalen Abstands der Halteplatte zu einer schmalseitigen Verbindung des Staubsaugerfilterbeutels bezogen auf eine Dimensionierung der Halteplatte in Längsrichtung des Staubsaugerfilterbeutels < 0,5, bevorzugt < 0,2, besonders bevorzugt von 0,1 bis 0.

Alternativ und ebenso bevorzugt ist es, dass die Halteplatte mit Eintrittsöffnung derart in der ersten Wandung des Staubsaugerfilterbeutels angeordnet ist, dass die Halteplatte die Schmalseite des Staubsaugerfilterbeutels überragt bzw. an dieser Schmalseite übersteht. Hierbei ist jedoch zu beachten, dass der Überstand so zu bemessen ist, dass die Eintrittsöffnung nach wie vor vollflächig in der Wandung ausgebildet ist. Bevorzugt beträgt das Verhältnis des Überstandes der Halteplatte zu einer schmalseitigen Verbindung des Staubsaugerfilterbeutels bezogen auf eine Dimensionierung der Halteplatte in Längsrichtung des Staubsaugerfilterbeutels < 0,5, bevorzugt < 0,2, besonders bevorzugt von 0,1 bis 0,01.

Bei diesen Ausführungsformen ist es ferner bevorzugt, wenn die Halteplatte vollflächig im Bereich eines Faltenschenkels ausgebildet ist, d.h. im Bereich des Anbringungsortes der Halteplatte ist keine Seitenfalte vorhanden.

Beide zuvor beschriebenen bevorzugten Ausführungsformen ermöglichen eine exzellente Art der Entfaltung des erfindungsgemäßen Staubsaugerfilterbeutels beim Einsetzen in einen hierfür vorgesehen Upright-Staubsauger. Durch die möglichst randnahe Anbringung der Halteplatte muss an diesem Ende der Staubsaugerfilterbeutel nur unwesentlich verkrümmt bzw. durch das Umlegen der Halteplatte verzerrt werden. Gleichzeitig wird hierdurch zusätzlich eine vollständige Entfaltung, d.h. ein Aufspannen des Innenraums durch Auseinanderspreizen der ersten von der zweiten Beutelwand gewährleistet.

Bevorzugt ist ferner, dass die Faltung der ersten Beutelwand des Filtermaterials maximal acht, bevorzugt maximal vier Seitenfalten aufweist.

Insbesondere und erfindungsgemäß besonders bevorzugt weist zumindest die Faltung der ersten Beutelwand vier Seitenfalten aufweist, wobei die Faltung bezüglich der ersten Beutelwand bevorzugt symmetrisch ausgebildet ist.

Diese Ausführungsform kann beispielsweise vorsehen, dass die erste Beutelwand des Staubsaugerfilterbeutels lediglich vier Falten aufweist, die gemäß den zuvor beschriebenen allgemeinen Ausführungen ausgebildet ist. Die vier Seitenfalten sind dabei, zumindest in der ersten Wandung des Staubsaugerfilterbeutels angebracht. Die Symmetrie ist dabei hinsichtlich einer demnach mittig verlaufenden Längsachse des Staubsaugerfilterbeutels spiegelbildlich, sodass die erste Falte spiegelsymmetrisch zur dritten Falte und die zweite Falte spiegelsymmetrisch zur vierten Falte ausgebildet ist. Die Faltung umfasst somit einen die zweite und vierte Falte verbindenden Schenkel, der die Vorderseite der Wandung des Staubsaugerfilterbeutels bildet. Bevorzugt ist insbesondere in diesem, die zweite und vierte Falte verbindenden Schenkel die Halteplatte samt Eintrittsöffnung untergebracht.

Eine bevorzugte Weiterbildung dieser Ausführungsform sieht vor dass der die erste und zweite Falte verbindende Schenkel auf der dem Innenraum abgewandten Seite des Schenkels, der die randseitige Verbindung der Längsseite und die erste Falte verbindet, angeordnet ist und in einem Lagerzustand auf diesem zum liegen kommt. Gleichzeitig weist die dritte Seitenfalte zwei Schenkel auf, wobei der erste Schenkel der dritten Seitenfalte die andere randseitige Verbindung der Längsseite und die dritte Falte verbindet und der zweite Schenkel die dritte und vierte Falte verbindet, wobei der Schenkel auf der dem Innenraum abgewandten Seite des Schenkels angeordnet ist und in einem Lagerzustand auf diesem zum Liegen kommt.

Wie bereits zuvor beschrieben, ist die Halteplatte mit der Eintrittsöffnung bevorzugt auf dem einem die zweite Seitenfalte und eine vierte Seitenfalte verbindenden Schenkel angeordnet.

Weiterhin ist bei der zuvor genannten Ausführungsform vorteilhaft, wenn der die zweite und vierte Seitenfalte verbindende Schenkel mindestens so breit dimensioniert ist, wie die Breite der Halteplatte. Bevorzugt weist die Breite des die zweite und vierte Seitenfalte verbindenden Schenkels das 1,1 bis 5-Fache der Breite der Halteplatte auf.

Eine alternative Ausführungsform des erfindungsgemäßen Staubsaugerfilterbeutels sieht vor, dass zumindest die Faltung der ersten Beutelwand acht Seitenfalten aufweist, wobei die Faltung bezüglich der ersten Beutelwand symmetrisch ausgebildet ist.

Diese Ausführungsform ähnelt der zuvor beschriebenen bevorzugten Ausführungsform mit vier Falten, der einzige Unterschied dabei ist, dass zwei weitere Falten in der Wandung vorhanden sind. Somit kann die Flexibilität des Staubsaugerfilterbeutels weiter erhöht werden.

Bei dieser Ausführungsform ist bevorzugt, dass die Faltung derart ausgebildet ist, dass die die jeweiligen Schenkel der jeweiligen Seitenfalten im Lagerzustand aufeinander zum liegen kommen und die Halteplatte an einem äußersten Schenkel angeordnet ist, der bevorzugt mindestens so breit dimensioniert ist, wie die Breite der Halteplatte, wobei weiter bevorzugt die Breite des Schenkels das 1,1 bis 5-Fache der Breite der Halteplatte 6 aufweist.

Bei allen zuvor beschriebenen Ausführungen des erfindungsgemäßen Staubsaugerfilterbeutels ist es vorteilhaft, wenn das Verhältnis von Länge zu Breite größer als 2, bevorzugt größer als 3 ist.

Prinzipiell kann auch die zweite Beutelwand, d.h. die Beutelwand auf die der ersten Beutelwand mit Halteplatte und Eintrittsöffnung gegenüber liegt, ebenso eine Faltung aufweisen. In diesem Falle, kann die Faltung in der zweiten Wandung identisch ausgebildet sein wie in der ersten Wandung. Bevorzugt hierbei ist allerdings, dass die zweite Beutelwand keine Faltung aufweist.

Insbesondere ist, das Filtermaterial der ersten und zweiten Beutelwand ein Vliesmaterial.

Das Vliesstoffmaterial kann eine oder mehrere Schichten aus Vliesstoffmaterial umfassen. Mehrere Schichten aus Vliesstoffmaterial können insbesondere gemeinsam gefaltet sein. Die Beutelwand kann insbesondere auch ein Laminat aus mehreren Schichten, insbesondere zwei oder mehr Schichten, umfassen oder aus einem solchen bestehen. Beispielsweise kann das Laminat ein Filamentspinnvliesstoff (Spunbond) - schmelzgesponnener Mikrofaserspinnvliesstoff (Meltblownvliesstoff) - Filamentspinnvliesstoff (Spunbond) Laminat (SMS-Laminat) sein. Auch können zwei oder mehr Meltblownvlieslagen verwendet werden (SMMS-Laminat, SnxMS-Laminat).

Als Materialien für die Beutelwand, insbesondere für das gefaltete Vliesstoffmaterial, kommen prinzipiell alle für die Herstellung von Staubsaugerfilterbeuteln bekannten Materialen in Betracht. Als Vliesstoffmaterial kann ein trocken- oder nassgelegter Vliesstoff oder ein Extrusionsvliesstoff, insbesondere ein schmelzgesponnener Mikrofaserspinnvliesstoff (Meltblownvliesstoff) oder Filamentspinnvliesstoff (Spunbond) verwendet werden. Es können auch zusätzlich Nanofaserlagen vorhanden sein. Die Abgrenzung zwischen nassgelegtem Vliesstoffen beziehungsweise Nonwovens und herkömmlichen nassgelegtem Papier erfolgt gemäß der unten genannten Definition, wie sie auch von der International Association Serving the Nonwovens and related Industries (EDANA) verwendet wird. Ein herkömmlich bekanntes (Filter-) Papier ist also kein Vliesstoff. Der Vliesstoff kann Stapelfasern oder Endlosfasern umfassen. Fertigungstechnisch können auch mehrere Schichten an Stapelfasern oder Endlosfasern vorgesehen werden, die zu genau einer Schicht Vliesstoff verfestigt werden. Beispielsweise kann die Beutelwand, insbesondere das gefaltete Vliesstoffmaterial, ein Laminat aus Filamentspinnvliesstoff und Meltblownvliesstoff (SMS, SMMS oder SnxMS) umfassen. Dieses Laminat kann mittels eines Heißklebers laminiert oder kalandriert sein. Die Schicht aus Meltblownvliesstoff kann gekreppt sein. Der Begriff Vliesstoff ("Nonwoven") wird gemäß der Definition nach ISO-Standard ISO 9092: 1988 beziehungsweise CEN-Standard EN29092 verwendet. Insbesondere sind die Begriffe Faservlies oder Vlies und Vliesstoff auf dem Gebiet der Herstellung von Vliesstoffen wie folgt gegeneinander abgegrenzt und auch im Sinne der vorliegenden Erfindung so zu verstehen. Zur Herstellung eines Vliesstoffes werden Fasern und/oder Filamente verwendet. Die lockeren oder losen und noch unverbundenen Fasern und/oder Filamente werden als Vlies oder Faservlies (Web) bezeichnet. Durch einen sogenannten Vliesbindeschritt entsteht aus einem derartigen Faservlies schließlich ein Vliesstoff, der eine ausreichende Festigkeit aufweist, um zum Beispiel zu Rollen aufgewickelt zu werden. Mit anderen Worten wird ein Vliesstoff durch die Verfestigung selbstragend ausgebildet. (Details zur Verwendung der hierin beschriebenen Definitionen und/oder Verfahren lassen sich auch im Standardwerk "Vliesstoffe", W. Albrecht, H. Fuchs, W. Kittelmann, Wiley-VCH, 2000 entnehmen.) Das Vliesstoffmaterial kann (bevor die Falten eingebracht werden) für Staubsaugerfilterbeutel für den Haushaltsgebrauch ein Flächengewicht von unter 350 g/m², bevorzugt unter 250 g/m², weiter bevorzugt unter 200 g/m², insbesondere zwischen 25 g/m² und 150 g/m², aufweisen. Das Vliesstoffmaterial kann (bevor die Falten eingebracht werden) auch ein Flächengewicht von über 250 g/m² aufweisen. Insbesondere für gewerbliche Staubsaugerfilterbeutel kann dies, je nach mechanischer Anforderung, vorteilhaft sein.

Zusätzlich oder alternativ zu den beschriebenen Weiterbildungen kann der Staubsaugerfilterbeutel wenigstens ein Element zur Strömungsumlenkung oder Strömungsverteilung im Staubsaugerfilterbeutel umfassen, insbesondere wobei sich das Element im Luftstrom der in den Staubsaugerfilterbeutel strömenden Luft bewegen kann. Ein derartiges Element ist beispielsweise aus der EP 1 787 560 oder der EP 1 804 635 bekannt. Beispielsweise kann ein solches Element in Form von wenigstens einem, im Inneren des Staubsaugerfilterbeutels, an der Beutelwand angebrachten Materialstreifen ausgebildet sein oder einen solchen Materialstreifen umfassen. Beispielsweise kann ein solches Element wenigstens einem Materialstreifen aus Vliesstoff oder Filterpapier entsprechen oder wenigstens einen Materialstreifen aus Vliesstoff oder Filterpapier umfassen. Der wenigstens eine Materialstreifen kann wenigstens teilweise geschlitzt sein.

Zudem betrifft die vorliegende Erfindung die Verwendung eines zuvor beschriebenen erfindungsgemäßen Staubsaugerfilterbeutels als Staubsaugerfilterbeutel für einen Upright-Staubsauger.
Weiterhin betrifft die vorliegende Erfindung ein Verfahren zur Herstellung eines zuvor beschriebenen erfindungsgemäßen Staubsaugerfilterbeutels für Upright-Staubsauger, bei dem
eine Bahn eines Filtermaterials für eine erste Beutelwand sowie eine Bahn eines Filtermaterials für eine zweite Beutelwand bereitgestellt wird, wobei die Bahn des Filtermaterials für die erste Beutelwand breiter dimensioniert ist wie die Bahn des Filtermaterials für die zweite Beutelwand,
in zumindest die Bahn des Filtermaterials für die erste Beutelwand eine mindestens eine erste und eine zweite Seitenfalte umfassende Faltung eingebracht wird, so dass die Seitenfalten parallel oder im Wesentlichen parallel zueinander verlaufen, wobei zwei Schenkel entstehen
die Bahn des Filtermaterials für die erste Beutelwand sowie die Bahn des Filtermaterials für eine zweite Beutelwand übereinander gebracht und randseitig umlaufend verbunden werden, so dass ein vollständig geschlossener Staubsaugerfilterbeutel entsteht, der einen zwischen der ersten und der zweiten Beutelwand ausgebildeten Innenraum aufweist, so dass das Längenverhältnis des die erste und zweite Seitenfalte verbindenden Schenkels zum Schenkel der die randseitige Verbindung mit der ersten Seitenfalte verbindet von 0,1 bis 0,8 beträgt, eine Eintrittsöffnung sowie eine Halteplatte in die Bahn des Filtermaterials für die erste Beutelwand eingebracht wird,
wobei die Bahn des Filtermaterials für die zweite Beutelwand eine Breite B aufweist und die Bahn des Filtermaterials für die erste Beutelwand und die Bahn des Filtermaterials für die zweite Beutelwand eine Länge in einem Verhältnis von > 1,5 aufweisen oder ein entsprechendes Verhältnis durch den Verbindungsschritt c) eingestellt wird, wobei Schritt d) auch vor Schritt a), Schritt b) oder Schritt c) ausgeführt werden kann.

Beim erfindungsgemäßen Verfahren werden somit prinzipiell zwei Bahnen aus einem Filtermaterial umlaufend miteinander verschweißt. Bevorzugt wird gleichzeitig bei dem Übereinanderbringen der Bahn für die erste Wandung und die zweite Wandung des Staubsaugerfilterbeutels eine Faltung in zumindest die erste Wandung, bevorzugt lediglich in die erste Wandung eingebracht und anschließend die Bahnen miteinander zum fertigen Staubsaugerfilterbeutel verbunden, z.B. verschweißt.

Vorteilhaft ist hierbei, wenn die Bahn des Filtermaterials für die erste Beutelwand mindestens 20 %, bevorzugt mindestens 30 %, besonders bevorzugt mindestens 40 % breiter dimensioniert ist wie die Bahn des Filtermaterials für die zweite Beutelwand.

Das Verfahren kann insbesondere kontinuierlich ausgeführt werden, hierbei sind die Bahn des Filtermaterials für die erste Beutelwand und die Bahn des Filtermaterials für die zweite Beutelwand in Längsrichtung endlos dimensioniert und das Verhältnis von Länge L zu Breite B wird durch Einbringen der randseitigen Verbindung in Längsrichtung erzeugt, wonach ein einzelner Staubsaugerfilterbeutel abgelängt wird.

Zudem ist es vorteilhaft, wenn das Filtermaterial für die erste und zweite Beutelwand ein Vliesmaterial ist und die randseitige Verbindung durch Schweißen, insbesondere durch Ultraschallverschweißen erzeugt wird.

Die vorliegende Erfindung wird anhand der nachfolgenden Ausführungen näher beschrieben, ohne die Erfindung auf die dargestellten speziellen Details zu beschränken.
Figur 1 zeigt hierbei eine erste, prinzipielle Ausführungsform der vorliegenden Erfindung.
Figur 2a und 2b zeigen mögliche Positionen der Halteplatte am Staubsaugerfilterbeutel.
Figur 3 zeigt eine bevorzugte Ausführungsform der vorliegenden Erfindung.
Figur 4 zeigt eine weitere Ausführungsform der vorliegenden Erfindung.
Figur 5 verdeutlich das Prinzip der mechanischen Entfaltung des Staubsaugerfilterbeutel aus einem Lager in einem Betriebszustand.

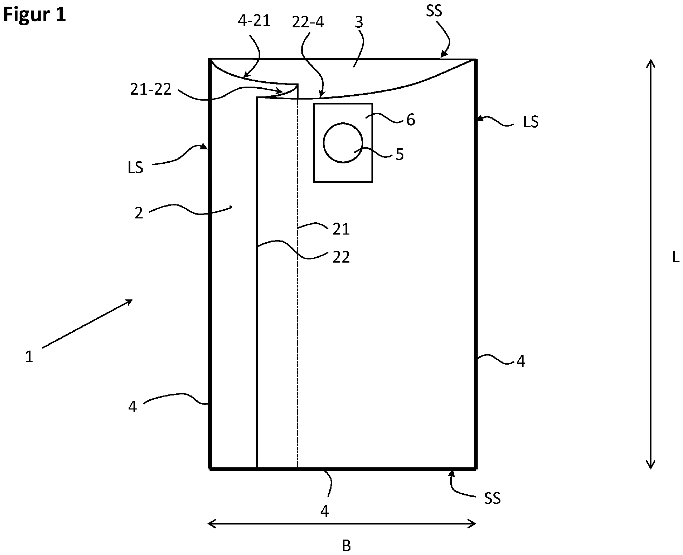

Figur 1 zeigt eine erste Ausführungsform eines erfindungsgemäßen Staubsaugerfilterbeutels 1. Dieser weist zwei Längsseiten LS und zwei Schmalseiten SS auf, wobei die in Figur 1 dargestellte untere Schmalseite SS verschlossen dargestellt ist und zur Verdeutlichung der Faltung im Staubsaugerfilterbeutel die obere Schmalseite SS geöffnet dargestellt ist. Im fertig konfektionierten Zustand ist die oben liegende Schmalseite SS jedoch selbstverständlich genau wie untenliegende Schmalseite SS verschlossen. Der Staubsaugerfilterbeutel 1 gemäß der vorliegenden Erfindung umfasst eine erste Beutelwand 2 sowie eine zweite Beutelwand 3, wobei im vorliegenden Fall die erste Beutelwand 2 in der Figur 1 vorneliegend dargestellt ist. Die Länge des Staubsaugerfilterbeutels ist mit L angegeben, die Breite mit B. Die beiden Beutelwandungen 2 und 3 sind umlaufend verbunden, was in Figur 1 mit dem Bezugszeichen 4 dargestellt ist. Die Verbindung 4 kann beispielsweise im Falle von Vliesmaterialien, die als Beutelwand 2 bzw. 3 eingesetzt werden können, eine Schweißnaht sein. Die erste Beutelwand 2 umfasst zudem eine Eintrittsöffnung 4, sowie eine Halteplatte 6, mit der Halteplatte 6 kann der Staubsaugerfilterbeutel 1 in einem Upright-Staubsauger fixiert werden. Zudem weist die erste Beutelwand 2 eine Faltung auf, die eine erste Seitenfalte 21 sowie eine zweite Seitenfalte 22 umfasst. Die Faltung der Wandung erstreckt sich somit in Längsrichtung L des Staubsaugerfilterbeutels 1 und ist über die komplette Länge der Wandung 2 ausgebildet. Die erste Falte umfasst dabei zwei Schenkel, nämlich einen ersten Schenkel 4-21, der von der linken Verbindung 4 des Staubsaugerfilterbeutels bis zur ersten Falte 21 geführt ist, sowie einen zweiten Schenkel 21-22, der die erste Falte 21 mit der zweiten Falte 22 verbindet. Der zweite Schenkel 21-22 der ersten Falte 21 stellt gleichzeitig den ersten Schenkel der zweiten Falte 22 dar, insofern ist der Schenkel 21-22 beiden Falten 21 und 22 gemein. Der zweite Schenkel 22-4 der zweiten Falte 22 führt von der zweiten Falte 22 hin zur rechten Verbindung 4 des Staubsaugerfilterbeutels.

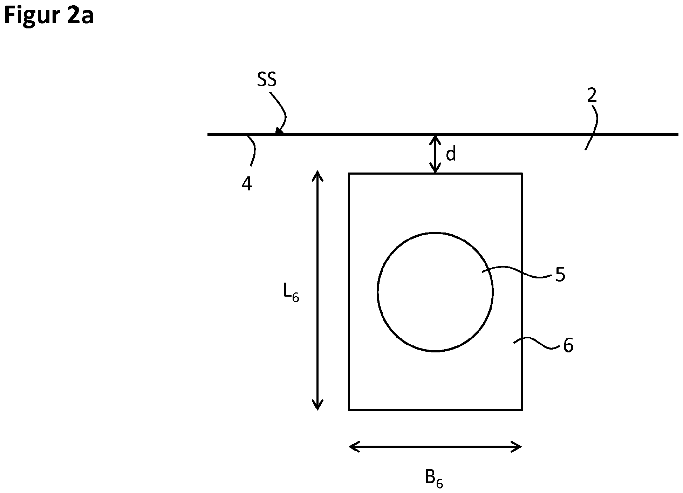

Figur 2a zeigt eine erste Möglichkeit des Anbringens einer Halteplatte 6 mit Eintrittsöffnung 5 in der ersten Wandung 2 des Staubsaugerfilterbeutels. Figur 2a stellt insofern einen vergrößerten Ausschnitt des Anbringungsbereich der Halteplatte 6 an der vorderen Wandung 2 des Staubsaugerfilterbeutels dar. Die Halteplatte weist dabei eine Länge L₆ sowie eine Breite B₆ auf. Der geringste Abstand der Halteplatte 6 zur randseitigen Verbindung 4 der Schmalseite SS ist dabei mit d bezeichnet. Gemäß dieser Ausführungsform ist vorgesehen, dass ein gewisser Abstand der Halteplatte zur randseitigen Verbindung nicht überschritten wird, sodass die Halteplatte dabei möglichst randseitig am Staubsaugerfilterbeutel angeordnet ist, um ein unkompliziertes mechanisches Entfalten beim Einsetzen des Staubsaugerfilterbeutels in einen Upright-Staubsauger zu ermöglichen. Die Details der mechanischen Entfaltung bei Einsetzen des Staubsaugerfilterbeutels 1 in des Upright-Staubsauger werden nachfolgend noch eingehender erläutert.

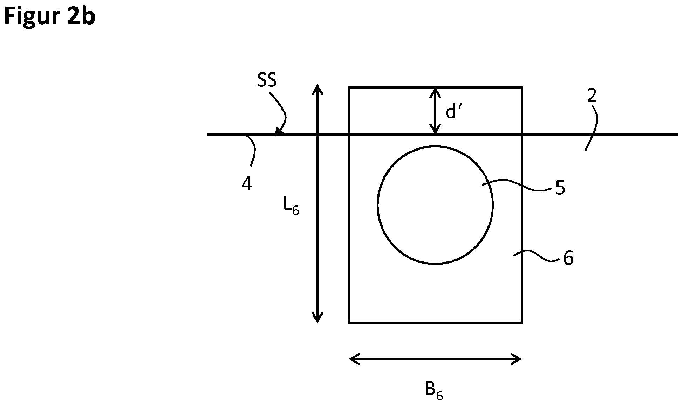

Figur 2b zeigte eine weitere Möglichkeit des Anbringens der Halteplatte am Staubsaugerfilterbeutel. Hierbei überragt die Halteplatte 6 den Staubsaugerfilterbeutel, d.h. ist über die Verbindung 4 der oben liegenden Schmalseite SS des Staubsaugerfilterbeutels hinausgeführt. Zu beachten ist dabei, dass die Eintrittsöffnung 5 noch vollständig in der ersten Wandung 2 des Staubsaugerfilterbeutels eingebracht ist. Sämtliche Bezugszeichen, die auch für Figur 2a verwendet wurden, gelten uneingeschränkt für die Figur 2b. Der Überstand der Halteplatte 6 ist hierbei der Länge der größten überstehenden Wegstrecke, gemessen von dem Punkt der Halteplatte 6, der am weitesten von der Verbindung zu der Schmalseite SS entfernt ist. In Figur 2b ist diese Strecke mit d' gekennzeichnet.

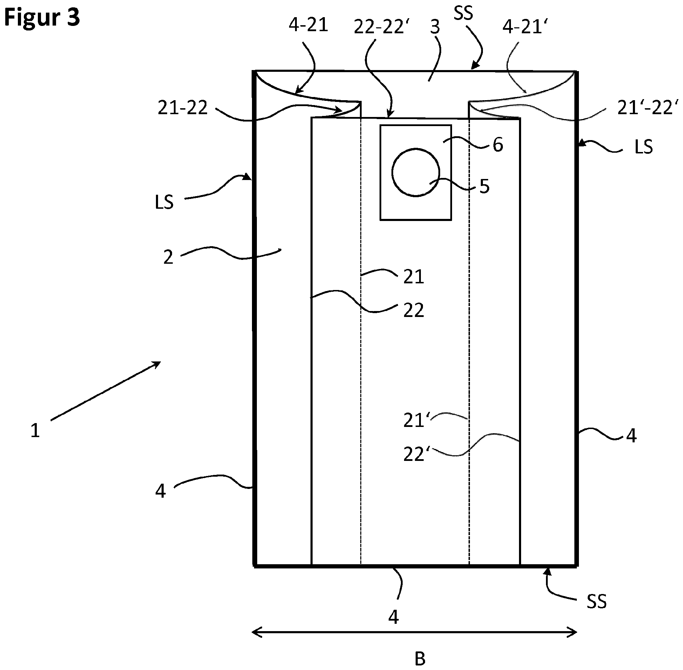

Figur 3 zeigt eine besonders bevorzugte Ausführungsform des erfindungsgemäßen Staubsaugerfilterbeutels 1. Dieser ist prinzipiell ähnlich ausgestaltet wie der Staubsaugerfilterbeutel 1 gemäß Fig. 1. Allerdings weist der Staubsaugerfilterbeutel 1 eine dritte Falte 21' sowie eine vierte Falte 22' auf und ist bezüglich der Faltung spiegelsymmetrisch zu einer gedachten, mittig verlaufenden Längsachse in Längsrichtung L des Staubsaugerfilterbeutels ausgebildet. Die zweite und vierte Falte verbindet dabei ein gemeinsamer Schenkel 22-22', die vierte Falte und die dritte Falte verfügen über einen gemeinsamen Schenkel 21'-22', während die dritte Falte über einen weiteren Schenkel 4-21' mit der in Figur 3 dargestellten rechten randseitigen Verbindung verbunden ist. Die Halteplatte 6 ist dabei im Schenkel 22-22', der die zweite Falte 22 mit der vierten Falte 22' verbindet, untergebracht.

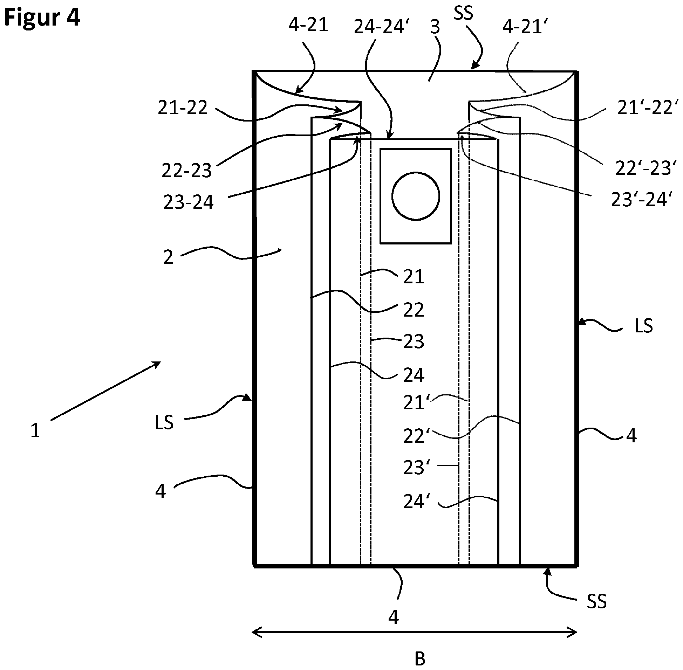

Eine weitere Möglichkeit der Ausbildung einer Faltung im Staubsaugerfilterbeutel ist in Figur 4 dargestellt. Anstelle der vier explizit vorhanden Falten des Staubsaugerfilterbeutels wie in Figur 3 dargestellt, verfügt der in Figur 4 dargestellte Staubsaugerfilterbeutel insgesamt über 8 Falten, die mit 21, 22, 23, 24, 21', 22', 23', 24' gekennzeichnet sind. Der Staubsaugerfilterbeutel gemäß Fig. 4 ist ebenso spiegelsymmetrisch bezüglich einer mittig verlaufenden Längsachse in Längsrichtung L des Staubsaugerfilterbeutels 1 ausgebildet. Die Falten untereinander verfügen dabei über gemeinsame Schenkel. Die Halteplatte ist beispielsweise in die Falte 24 und die Falte 24'verbindenden Schenkel 24-24' angeordnet.

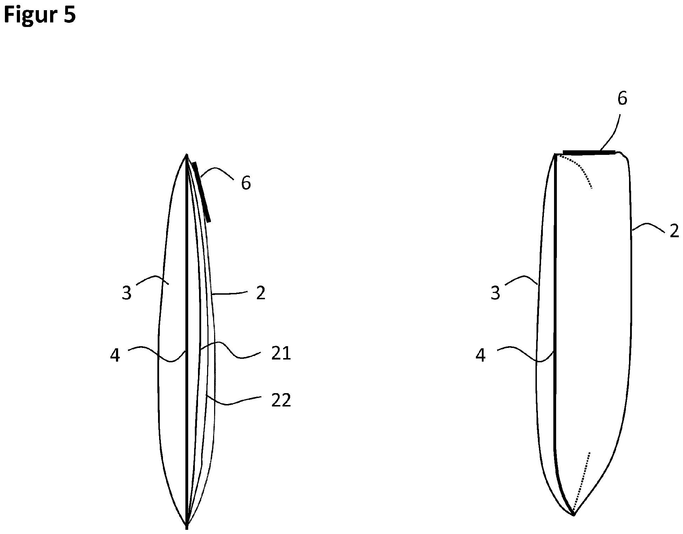

In Figur 5 ist die Funktionsweise der mechanischen Entfaltung des Staubsaugerfilterbeutels beim Einsetzen in einen Upright-Staubsauger dargestellt. Die in Figur 5 links dargestellte Abbildung zeigt einen erfindungsgemäßen Staubsaugerfilterbeutel wie beispielsweise in Fig. 1 bzw. Fig. 3 dargestellt im Lagezustand. Dargestellt ist die Aufsicht auf die in Fig. 1 bzw. Fig. 3 dargestellte linke Längsseite LS des Staubsaugerfilterbeutels. Erkennbar ist die hintere Wandung des Staubsaugerfilterbeutels 3, in der keine Faltung eingebracht ist, sowie die vordere Wandung des Staubsaugerfilterbeutels, in der obenliegend die Halteplatte sowie die Faltung mit den Seitenfalten 21 und 22 eingebracht sind. In Figur 5 ist auf der rechten Seiten der Staubsaugerfilterbeutel in Gebrauchsposition, d.h. mechanisch entfaltet dargestellt. Hierbei wird die Halteplatte um ca. 90° nach oben geschwenkt, sodass ein Abluftstutzen eines entsprechend Upright-Staubsaugers (nicht dargestellt) durch die Eintrittsöffnung (nicht dargestellt) in das Volumeninnere des Staubsaugerfilterbeutels eingeführt werden kann. Durch die vorhandene Faltung, bestehend aus den Seitenfalten 21 und 22 verfügt die erste Wandung 2 des Staubsaugerfilterbeutels über eine gewissen Flexibilität, sodass beim Aufklappen der Halteklappe 6 in Betriebsposition des Staubsaugerfilterbeutels die Wandung 2 zusammen mit der Halteplatte 6 nach oben gezogen wird. Hierbei findet ein Entfalten der Faltung damit ein Ausstülpen des Staubsaugerfilterbeutels statt, sodass die Vorderwandung 2 von der hinteren Wandung 3 abgelöst und der Staubsaugerfilterbeutel insgesamt aufgeklappt wird. Dabei findet ggf. eine flexible Verformung des Staubsaugerfilterbeutels im oberen und unteren Bereich statt, sodass verglichen mit der Lagerposition die Länge L des Staubsaugerfilterbeutels im Betriebszustand etwas kürzer ausfällt. Der Staubsaugerfilterbeutel ist somit bereits vor erstmaliger Inbetriebnahme vollständig entfaltet, sodass Verstopfungen etc. effektiv unterbunden werden können.

## Patentansprüche

1. Staubsaugerfilterbeutel (1) für einen Upright-Staubsauger, der eine Länge (L) und eine Breite (B) in einem Verhältnis von > 1,5 aufweist, so dass der Staubsaugerfilterbeutel eine Längsseite (LS) und eine Schmalseite (SS) aufweist, mit einer ersten ein Filtermaterial umfassenden Beutelwand (2), einer zweiten ein Filtermaterial umfassenden Beutelwand (3), wobei die erste (2) und zweite (3) Beutelwand randseitig umlaufend verbunden (4) sind, so dass der Staubsaugerfilterbeutel (1) vollständig geschlossen ist und zwischen der ersten (2) und der zweiten Beutelwand (3) ein Innenraum ausgebildet ist, eine in die erste Beutelwand (2) eingebrachte Eintrittsöffnung (5), durch die zu reinigende Luft in den Staubsaugerfilterbeutel (1) einströmen kann sowie eine die Eintrittsöffnung (5) einfassende Halteplatte (6),
**dadurch gekennzeichnet,**
**dass** zumindest die erste Beutelwand (2) eine mindestens eine erste (21) und eine zweite Seitenfalte (22) umfassende, sich in Längsrichtung (L) des Staubsaugerfilterbeutels (1) erstreckende Faltung aufweist, wobei die erste (21) und zweite Seitenfalte (22) parallel oder im Wesentlichen parallel zueinander verlaufen, die erste Seitenfalte (21) zwei Schenkel (4-21, 21-22) aufweist, und das Längenverhältnis des Schenkels (21-22) zum Schenkel (4-21) von 0,1 bis 0,8 beträgt.

2. Staubsaugerfilterbeutel (1) nach Anspruch 1, **dadurch gekennzeichnet,**
**dass** die Halteplatte (6) mit Eintrittsöffnung (5)
nahe zu einer Schmalseite (SS) des Staubsaugerfilterbeutels angeordnet ist, so dass das Verhältnis des minimalen Abstands (d) der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,5beträgt, oder
eine Schmalseite (SS) des Staubsaugerfilterbeutels überstehend angeordnet ist, so dass das Verhältnis des Überstandes (d') der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,5beträgt.

3. Staubsaugerfilterbeutel (1) nach einem der vorhergehenden Ansprüche, **dadurch gekennzeichnet, dass** die Faltung der ersten Beutelwand (2) des Filtermaterials maximal acht Seitenfalten (21, 22, 23, 24, 21', 22', 23', 24') aufweist.

4. Staubsaugerfilterbeutel (1) nach einem der vorhergehenden Ansprüche, **dadurch gekennzeichnet, dass** zumindest die Faltung der ersten Beutelwand (2) vier Seitenfalten (21, 22, 21', 22') aufweist, wobei die Faltung bezüglich der ersten Beutelwand (2) symmetrisch ausgebildet ist.

5. Staubsaugerfilterbeutel (1) nach vorhergehendem Anspruch, **dadurch gekennzeichnet, dass** der Schenkel (21-22) auf der dem Innenraum abgewandten Seite des Schenkels (4-21) angeordnet ist und in einem Lagerzustand auf diesem zum liegen kommt und eine dritte Seitenfalte (21') zwei Schenkel (4-21', 21'-22') aufweist, wobei der Schenkel (21'-22') auf der dem Innenraum abgewandten Seite des Schenkels (4-21') angeordnet ist und in einem Lagerzustand auf diesem zum Liegen kommt.

6. Staubsaugerfilterbeutel (1) nach einem der beiden vorhergehenden Ansprüche, **dadurch gekennzeichnet, dass** die Halteplatte (6) mit der Eintrittsöffnung (5) auf einem die zweite Seitenfalte (22) und eine vierte Seitenfalte (22') verbindenden Schenkel (22-22') angeordnet ist.

7. Staubsaugerfilterbeutel (1) nach einem der Ansprüche 4 bis 6, **dadurch gekennzeichnet, dass** der Schenkel (22-22') mindestens so breit dimensioniert ist, wie die Breite (B₆) der Halteplatte (6).

8. Staubsaugerfilterbeutel (1) nach einem der Ansprüche 1 bis 3, **dadurch gekennzeichnet, dass** zumindest die Faltung der ersten Beutelwand (2) acht Seitenfalten (21, 22, 23, 24, 21', 22', 23', 24') aufweist, wobei die Faltung bezüglich der ersten Beutelwand (2) symmetrisch ausgebildet ist.

9. Staubsaugerfilterbeutel (1) nach vorhergehendem Anspruch, **dadurch gekennzeichnet, dass** die Faltung derart ausgebildet ist, dass die jeweiligen Schenkel der jeweiligen Seitenfalten im Lagerzustand aufeinander zum liegen kommen und die Halteplatte an einem äußersten Schenkel (24-24') angeordnet ist.

10. Staubsaugerfilterbeutel (1) nach einem der vorhergehenden Ansprüche, **dadurch gekennzeichnet, dass** das Verhältnis von Länge (L) zu Breite (B) größer als 2 ist.

11. Staubsaugerfilterbeutel (1) nach einem der vorhergehenden Ansprüche, **dadurch gekennzeichnet, dass** die zweite Beutelwand (3) keine Faltung aufweist.

12. Staubsaugerfilterbeutel (1) nach einem der vorhergehenden Ansprüche, **dadurch gekennzeichnet, dass** das Filtermaterial der ersten (2) und zweiten (3) Beutelwand ein Vliesmaterial ist.

13. Verwendung eines Staubsaugerfilterbeutels (1) nach einem der vorhergehenden Ansprüche als Staubsaugerfilterbeutel für einen Upright-Staubsauger.

14. Verfahren zur Herstellung eines Staubsaugerfilterbeutels (1) nach einem der Ansprüche 1 bis 12, bei dem
a) eine Bahn eines Filtermaterials für eine erste Beutelwand (2) sowie eine Bahn eines Filtermaterials für eine zweite Beutelwand (3) bereitgestellt wird, wobei die Bahn des Filtermaterials für die erste Beutelwand (2) breiter dimensioniert ist wie die Bahn des Filtermaterials für die zweite Beutelwand (3),
b) in zumindest die Bahn des Filtermaterials für die erste Beutelwand (2) eine mindestens eine erste (21) und eine zweite Seitenfalte (22) umfassende Faltung eingebracht wird, so dass die Seitenfalten parallel oder im Wesentlichen parallel zueinander verlaufen, wobei zwei Schenkel (4-21, 21-22) entstehen,
c) die Bahn des Filtermaterials für die erste Beutelwand (2) sowie die Bahn des Filtermaterials für eine zweite Beutelwand (3) übereinander gebracht und randseitig umlaufend verbunden (4) werden, so dass ein vollständig geschlossener Staubsaugerfilterbeutel (1) entsteht, der einen zwischen der ersten (2) und der zweiten Beutelwand (3) ausgebildeten Innenraum aufweist, so dass das Längenverhältnis des Schenkels (21-22) zum Schenkel (4-21) von 0,1 bis 0,8 beträgt,
d) eine Eintrittsöffnung (5) sowie eine Halteplatte (6) in die Bahn des Filtermaterials für die erste Beutelwand (2) eingebracht wird,
wobei die Bahn des Filtermaterials für die zweite Beutelwand (3) eine Breite (B) aufweist und die Bahn des Filtermaterials für die erste Beutelwand (2) und die Bahn des Filtermaterials für die zweite Beutelwand (3) eine Länge (L) in einem Verhältnis von > 1,5 aufweisen oder ein entsprechendes Verhältnis durch den Verbindungsschritt c) eingestellt wird,
wobei Schritt d) auch vor Schritt a), Schritt b) oder Schritt c) ausgeführt werden kann.

15. Verfahren nach vorhergehendem Anspruch, **dadurch gekennzeichnet, dass** die Bahn des Filtermaterials für die erste Beutelwand (2) mindestens 20 % breiter dimensioniert ist wie die Bahn des Filtermaterials für die zweite Beutelwand (3).

16. Verfahren nach einem der beiden vorhergehenden Ansprüche, **dadurch gekennzeichnet, dass** die Bahn des Filtermaterials für die erste Beutelwand (2) und die Bahn des Filtermaterials für die zweite Beutelwand (3) in Längsrichtung endlos dimensioniert sind und das Verhältnis von Länge (L) zu Breite (B) durch Einbringen der randseitigen Verbindung (4) in Längsrichtung erzeugt wird, wonach ein einzelner Staubsaugerfilterbeutel (1) abgelängt wird.

17. Verfahren nach einem der Ansprüche 14 bis 16, **dadurch gekennzeichnet, dass** das Filtermaterial für die erste (2) und zweite Beutelwand (3) ein Vliesmaterial ist und die randseitige Verbindung (4) durch Schweißen erzeugt wird.

## Claims

1. A vacuum-cleaner filter bag (1) for an upright vacuum cleaner, which has a length (L) and a width (B) in a ratio of > 1.5, so that the vacuum-cleaner filter bag has a long side (LS) and a narrow side (SS), with a first bag wall (2) comprising a filter material, a second bag wall (3) comprising a filter material, wherein the first (2) and second (3) bag wall are joined (4) in circumambient manner at the edges, so that the vacuum-cleaner filter bag (1) is completely closed and an inner space is formed between the first (2) and the second (3) bag wall, an entry opening (5) made in the first bag wall (2), through which opening air which is to be cleaned can flow into the vacuum-cleaner filter bag (1) and also a holding plate (6) encompassing the entry opening (5),
**characterised in that**
at least the first bag wall (2) has folding comprising at least a first (21) and a second (22) lateral fold and extending in the longitudinal direction (L) of the vacuum-cleaner filter bag (1), the first (21) and second (22) lateral fold extending parallel or substantially parallel to one another, the first lateral fold (21) having two branches (4-21, 21-22), and the length ratio of the branch (21-22) to the branch (4-21) being from 0.1 to 0.8.

2. A vacuum-cleaner filter bag (1) according to Claim 1, **characterised in that** the holding plate (6) with entry opening (5)
is arranged close to a narrow side (SS) of the vacuum-cleaner filter bag, so that the ratio of the minimum distance (d) of the holding plate (6) from a join (4), on the narrow side, of the vacuum-cleaner filter bag relative to dimensioning (L₆) of the holding plate (6) in the longitudinal direction (L) of the vacuum-cleaner filter bag (1) is < 0.5, or
is arranged projecting over a narrow side (SS) of the vacuum-cleaner filter bag, so that the ratio of the projecting length (d') of the holding plate (6) to a join (4), on the narrow side, of the vacuum-cleaner filter bag relative to dimensioning (L₆) of the holding plate (6) in the longitudinal direction (L) of the vacuum-cleaner filter bag (1) is < 0.5.

3. A vacuum-cleaner filter bag (1) according to one of the preceding claims, **characterised in that** the folding of the first bag wall (2) of the filter material has at most eight lateral folds (21, 22, 23, 24, 21', 22', 23', 24').

4. A vacuum-cleaner filter bag (1) according to one of the preceding claims, **characterised in that** at least the folding of the first bag wall (2) has four lateral folds (21, 22, 21', 22'), the folding being formed symmetrically with respect to the first bag wall (2).

5. A vacuum-cleaner filter bag (1) according to the preceding claim, **characterised in that** the branch (21-22) is arranged on that side of the branch (4-21) which is remote from the inner space, and in a storage state comes to lie thereon, and a third lateral fold (21') has two branches (4-21', 21'-22'), the branch (21'- 22') being arranged on that side of the branch (4-21') which is remote from the inner space, and in a storage state coming to lie thereon.

6. A vacuum-cleaner filter bag (1) according to one of the preceding two claims, **characterised in that** the holding plate (6) with the entry opening (5) is arranged on a branch (22-22') connecting the second lateral fold (22) and a fourth lateral fold (22').

7. A vacuum-cleaner filter bag (1) according to one of Claims 4 to 6, **characterised in that** the branch (22-22') is at least as wide as the width (B₆) of the holding plate (6).

8. A vacuum-cleaner filter bag (1) according to one of Claims 1 to 3, **characterised in that** at least the folding of the first bag wall (2) has eight lateral folds (21, 22, 23, 24, 21', 22', 23', 24'), the folding being formed symmetrically with respect to the first bag wall (2).

9. A vacuum-cleaner filter bag (1) according to the preceding claim, **characterised in that** the folding is formed such that the respective branch of the respective lateral folds in the storage state come to lie on one another and the holding plate is arranged on an outermost branch (24-24').

10. A vacuum-cleaner filter bag (1) according to one of the preceding claims, **characterised in that** the ratio of length (L) to width (B) is greater than 2.

11. A vacuum-cleaner filter bag (1) according to one of the preceding claims, **characterised in that** the second bag wall (3) does not have any folding.

12. A vacuum-cleaner filter bag (1) according to one of the preceding claims, **characterised in that** the filter material of the first (2) and second (3) bag wall is a non-woven material.

13. Use of a vacuum-cleaner filter bag (1) according to one of the preceding claims as a vacuum-cleaner filter bag for an upright vacuum cleaner.

14. A method for producing a vacuum-cleaner filter bag (1) according to one of Claims 1 to 12, in which
a) a web of a filter material for a first bag wall (2) and also a web of a filter material for a second bag wall (3) is provided, wherein the web of the filter material for the first bag wall (2) is wider as the web of the filter material for the second bag wall (3),
b) folding comprising at least a first (21) and a second (22) lateral fold is introduced into at least the web of the filter material for the first bag wall (2), so that the lateral folds extend parallel or substantially parallel to one another, producing two branches (4-21, 21-22),
c) the web of the filter material for the first bag wall (2) and also the web of the filter material for a second bag wall (3) are brought over one another and are joined (4) in circumambient manner at the edges, so that a completely closed vacuum-cleaner filter bag (1) is produced which has an inner space formed between the first (2) and the second bag wall (3), so that the length ratio of the branch (21-22) to the branch (4-21) is from 0.1 to 0.8,
d) an entry opening (5) and also a holding plate (6) is introduced into the web of the filter material for the first bag wall (2),
wherein the web of the filter material for the second bag wall (3) has a width (B) and the web of the filter material for the first bag wall (2) and the web of the filter material for the second bag wall (3) have a length (L) in a ratio of > 1.5 or a corresponding ratio is set by the joining step c),
wherein step d) can also be carried out prior to step a), step b) or step c).

15. A method according to the preceding claim, **characterised in that** the web of the filter material for the first bag wall (2) is at least 20% wider as the web of the filter material for the second bag wall (3).

16. A method according to one of the preceding two claims, **characterised in that** the web of the filter material for the first bag wall (2) and the web of the filter material for the second bag wall (3) are of endless dimension in the longitudinal direction and the ratio of length (L) to width (B) is produced by introducing the join (4) at the edges in the longitudinal direction, after which an individual vacuum-cleaner filter bag (1) is cut off.

17. A method according to one of Claims 14 to 16, **characterised in that** the filter material for the first (2) and second (3) bag wall is a non-woven material and the join (4) at the edges is produced by welding.

## Revendications

1. Sac filtrant d'aspirateur (1) pour un aspirateur balai qui présente une longueur (L) et une largeur (B) selon un rapport de > 1,5, de telle sorte que le sac filtrant d'aspirateur présente un grand côté (LS) et un petit côté (SS), avec une première paroi de sac (2) comprenant un matériau filtrant, une deuxième paroi de sac (3) comprenant un matériau filtrant, la première paroi de sac (2) et la deuxième paroi de sac (3) étant raccordées (4) côté bord de façon périphérique de telle sorte que le sac filtrant d'aspirateur (1) est entièrement fermé et un espace intérieur est constitué entre la première paroi de sac (2) et la deuxième paroi de sac (3), un orifice d'entrée (5) mis en place dans la première paroi de sac (2) à travers lequel l'air à nettoyer peut affluer dans le sac filtrant d'aspirateur (1) ainsi qu'une plaque de retenue (6) encadrant l'orifice d'entrée (5),
**caractérisé en ce que**
au moins la première paroi de sac (2) présente un pliage comprenant au moins un premier pli latéral (21) et un deuxième pli latéral (22) et s'étendant dans la direction longitudinale (L) du sac filtrant d'aspirateur (1), le premier pli latéral (21) et le deuxième pli latéral (22) étant parallèles ou essentiellement parallèles entre eux, le premier pli latéral (21) présentant deux branches (4-21, 21-22), et le rapport de longueur de la branche (21-22) à la branche (4-21) étant compris entre 0,1 et 0,8.

2. Sac filtrant d'aspirateur (1) selon la revendication 1, **caractérisé en ce que** la plaque de retenue (6) avec l'orifice d'entrée (5) est disposée près d'un petit côté (SS) du sac filtrant d'aspirateur de telle sorte que le rapport de la distance (d) minimale de la plaque de retenue (6) à un raccordement (4) côté étroit du sac filtrant d'aspirateur rapporté à un dimensionnement (L₆) de la plaque de retenue (6) dans la direction longitudinale (L) du sac filtrant d'aspirateur (1) est < 0,5, ou
un petit côté (SS) du sac filtrant d'aspirateur est disposé en saillie de telle sorte que le rapport de la saillie (d') de la plaque de retenue (6) à un raccordement (4) côté étroit du sac filtrant d'aspirateur rapporté à un dimensionnement (L₆) de la plaque de retenue (6) dans la direction longitudinale (L) du sac filtrant d'aspirateur (1) est < 0,5.

3. Sac filtrant d'aspirateur (1) selon l'une des revendications précédentes, **caractérisé en ce que** le pliage de la première paroi de sac (2) du matériau filtrant est au maximum au nombre de huit plis latéraux (21, 22, 23, 24, 21', 22', 23', 24').

4. Sac filtrant d'aspirateur (1) selon l'une des revendications précédentes, **caractérisé en ce qu'**au moins le pliage de la première paroi de sac (2) présente quatre plis latéraux (21, 22, 21', 22'), le pliage étant constitué de façon symétrique par rapport à la première paroi de sac (2).

5. Sac filtrant d'aspirateur (1) selon la revendication précédente, **caractérisé en ce que** la branche (21-22) est disposée sur le côté de la branche (4-21) éloigné de l'espace intérieur et vient, dans un état d'entreposage, reposer sur celle-ci, et un troisième pli latéral (21') présente deux branches (4-21', 21'-22'), la branche (21'-22') étant disposée sur le côté de la branche (4-21') éloigné de l'espace intérieur et venant reposer sur celle-ci dans un état d'entreposage.

6. Sac filtrant d'aspirateur (1) selon l'une des deux revendications précédentes, **caractérisé en ce que** la plaque de retenue (6) avec l'orifice d'entrée (5) est disposée sur une branche (22-22') raccordant le deuxième pli latéral (22) et un quatrième pli latéral (22').

7. Sac filtrant d'aspirateur (1) selon l'une des revendications 4 à 6, **caractérisé en ce que** la branche (22-22') est dimensionnée de façon au moins aussi large de la largeur (B₆) de la plaque de retenue (6).

8. Sac filtrant d'aspirateur (1) selon l'une des revendications 1 à 3, **caractérisé en ce qu'**au moins le pliage de la première paroi de sac (2) présente huit plis latéraux (21, 22, 23, 24, 21', 22', 23', 24'), le pliage étant constitué de façon symétrique par rapport à la première paroi de sac (2).

9. Sac filtrant d'aspirateur (1) selon la revendication précédente, **caractérisé en ce que** le pliage est constitué de telle sorte que les branches respectives des plis latéraux respectifs viennent reposer l'une sur l'autre dans l'état d'entreposage et la plaque de retenue est disposée sur une branche (24-24') la plus extérieure.

10. Sac filtrant d'aspirateur (1) selon l'une des revendications précédentes, **caractérisé en ce que** le rapport de la longueur (L) à la largeur (B) est supérieur à 2.

11. Sac filtrant d'aspirateur (1) selon l'une des revendications précédentes, **caractérisé en ce que** la deuxième paroi de sac (3) ne présente pas de pliage.

12. Sac filtrant d'aspirateur (1) selon l'une des revendications précédentes, **caractérisé en ce que** le matériau filtrant de la première paroi de sac (2) et de la deuxième paroi de sac (3) est un matériau non tissé.

13. Utilisation d'un sac filtrant d'aspirateur (1) selon l'une des revendications précédentes en tant que sac filtrant d'aspirateur pour un aspirateur balai.

14. Procédé de fabrication d'un sac filtrant d'aspirateur (1) selon l'une des revendications 1 à 12, dans lequel
a) une bande d'un matériau filtrant est fournie pour une première paroi de sac (2) de même qu'une bande d'un matériau filtrant est fournie pour une deuxième paroi de sac (3), la bande de matériau filtrant pour la première paroi de sac (2) est dimensionnée plus large que la bande de matériau filtrant pour la deuxième paroi de sac (3),
b) un pliage comprenant au moins un premier pli latéral (21) et un deuxième pli latéral (22) est mis en place dans au moins la bande de matériau filtrant pour la première paroi de sac (2) de telle sorte que les plis latéraux sont parallèles ou essentiellement parallèles entre eux, deux branches (4-21, 21-22) étant créées,
c) la bande de matériau filtrant pour la première paroi de sac (2) ainsi que la bande de matériau filtrant pour une deuxième paroi de sac (3) sont placées l'une au-dessus de l'autre et sont raccordées (4) côté bord de façon périphérique de telle sorte qu'un sac filtrant d'aspirateur (1) entièrement fermé est créé qui présente un espace intérieur constitué entre la première paroi de sac (2) et la deuxième paroi de sac (3) de telle sorte que le rapport de longueur de la branche (21, 22) à la branche (4-21) est compris entre 0,1 et 0,8.
d) un orifice d'entrée (5) ainsi qu'une plaque de retenue (6) sont mis en place dans la bande de matériau filtrant pour la première paroi de sac (2),
la bande de matériau filtrant pour la deuxième paroi de sac (3) présentant une largeur (B), et la bande de matériau filtrant pour la première paroi de sac (2) et la bande de matériau filtrant pour la deuxième paroi de sac (3) présentant une longueur (L) selon un rapport de > 1,5, ou un rapport correspondant étant réglé par l'étape de raccordement c),
l'étape d) pouvant être réalisée également avant l'étape a), l'étape b) ou l'étape c).

15. Procédé selon la revendication précédente, **caractérisé en ce que** la bande de matériau filtrant pour la première paroi de sac (2) est dimensionnée plus large d'au moins 20% que la bande de matériau filtrant pour la deuxième paroi de sac (3).

16. Procédé selon l'une des deux revendications précédentes, **caractérisé en ce que** la bande de matériau filtrant pour la première paroi de sac (2) et la bande de matériau filtrant pour la deuxième paroi de sac (3) sont dimensionnées sans fin dans la direction longitudinale, et le rapport de la longueur (L) à la largeur (B) est produit par la mise en place du raccordement (4) côté bord dans la direction longitudinale, après quoi un sac filtrant d'aspirateur (1) unique est coupé à longueur.

17. Procédé selon l'une des revendications 14 à 16, **caractérisé en ce que** le matériau filtrant pour la première paroi de sac (2) et la deuxième paroi de sac (3) est un matériau non tissé et le raccordement (4) côté bord est produit par soudage.
